# DEMANDE DE BREVET EUROPEEN

(11) **EP 2 281 451 A1**
(43) Date de publication de la demande: **09.02.2011**
(21) Numéro de dépôt: 09290737.7
(22) Date de dépôt: 29.09.2009
(51) Int. Cl.: A01K 5/00, A23N 17/00

(54) **Caisson pour melanger des aliments**

(30) Priorité: 07.08.2009 FR 0903884
(71) Demandeur: SARL Belair, 35133 Parigne (FR)
(72) Inventeur: Janvier, Etienne, 35133 Parigne (FR)
(74) Mandataire: Hammond, William

(57) **Abrégé**

Caisson pour mélanger des aliments destinés à des animaux comportant notamment un dispositif de mélange.

Ce dispositif de mélange est constitué par au moins une vis (3) de mélange d'axe vertical (6), qui comprend, du bas vers le haut, un premier filet (4) tournant dans un certain sens, et un second filet (5) tournant en sens inverse dudit premier filet (4).

Application dans le domaine du machinisme agricole

## Description

La présente invention concerne un caisson pour mélanger des aliments destinés à des animaux comportant notamment un dispositif de mélange.

Pour alimenter des animaux d'élevage tels que des mammifères, on utilise généralement des aliments naturels tels que de l'herbe ou du foin, mais aussi apporter des compléments alimentaires destinés à équilibrer les rations alimentaires. Ces compléments sont généralement sous forme solide, granulés ou farines. Pour ces produits, il faut souvent les mélanger avant de les distribuer aux animaux soit pour des raisons d'appétence, soit pour en assurer une réparation homogène lors de cette distribution.

Les caissons actuels comportent au moins une vis mélangeuse, mais le plus souvent celle-ci est aussi distributrice. Ces appareils de l'art antérieur présentent au moins les deux inconvénients suivants : mélange pas totalement satisfaisant et trop de risque de débordements.

Aussi un des buts de la présente invention est-il de fournir un caisson pour mélanger des aliments destinés à des animaux comportant notamment un dispositif de mélange, qui permet d'obvier les inconvénients rapportés ci-dessus.

Un autre but de l'invention est de fournir un tel caisson à un coût raisonnable ; Ces buts, ainsi que d'autres qui apparaitront par la suite, sont atteints par un caisson pour mélanger des aliments destinés à des animaux comportant notamment un dispositif de mélange, qui est caractérisé, selon la présente invention, par le fait que ce dispositif de mélange est constitué par au moins une vis de mélange d'axe vertical, qui comprend, du bas vers le haut, un premier filet tournant dans un certain sens, et un second filet tournant en sens inverse au premier filet.

Avantageusement, le second filet s'étend approximativement sur un pas.

De préférence, le caisson comporte un couvercle.

Selon un premier mode de réalisation de la présente invention, le premier filet et le second filet sont de sens contraire et fixés sur l'axe de la vis mélangeuse.

Selon un second mode de réalisation de la présente invention, l'axe de la vis est constitué d'un tube creux sur lequel est monté le premier filet et d'une tige qui est disposé dans le tube creux et sur laquelle est monté le second filet, les deux filets étant de même sens mais tournant en sens inverse l'un par rapport à l'autre.

Avantageusement, en rotation, les bords des filets ont pour enveloppe un tronc de cône dont le sommet est situé à la partie supérieure de l'axe de rotation de cette vis de mélange.

La description qui va suivre et qui ne présente aucun caractère limitatif, doit être lue en regard des figures annexées, parmi lesquelles :
- La figure 1 est une vue en perspective d'un caisson selon la présente invention ;
- La figure 2 est une vue de face du caisson selon la figure 1;
- La figure 3 est une vue en perspective d'un dispositif de mélange selon un premier mode de réalisation de la présente invention ; et,
- La figure 4 est une vue en perspective d'un dispositif de mélange selon un second mode de réalisation de la présente invention;

Ainsi qu'on peut le voir sur ces figures, un caisson 1 selon la présente invention est de forme générale parallélépipédique, est munie d'un couvercle 2 ; il comporte des ouvertures (non représentées sur ces figures) pour l'évacuation des produits mélangés. Il peut aussi comporter des ouvertures pour l'arrivée de produits, si ceux-ci ne sont pas conditionnés en sacs et déversés directement dans le caisson.

Ce caisson 1 comprend un dispositif de mélange qui est constitué par au moins une vis verticale de mélange désigné dans don ensemble par la référence 3. Cette vis 3 comprend, du bas vers le haut, un premier filet 4 tournant dans un certain sens, et, selon la présente invention, un second filet 5 en sens inverse du premier filet 4. Ce second filet 5 s'étend approximativement sur un pas.

Selon un premier mode de réalisation, ces filets sont de sens contraire et solidaires de l'axe de rotation 6 de la vis verticale de mélange 3.

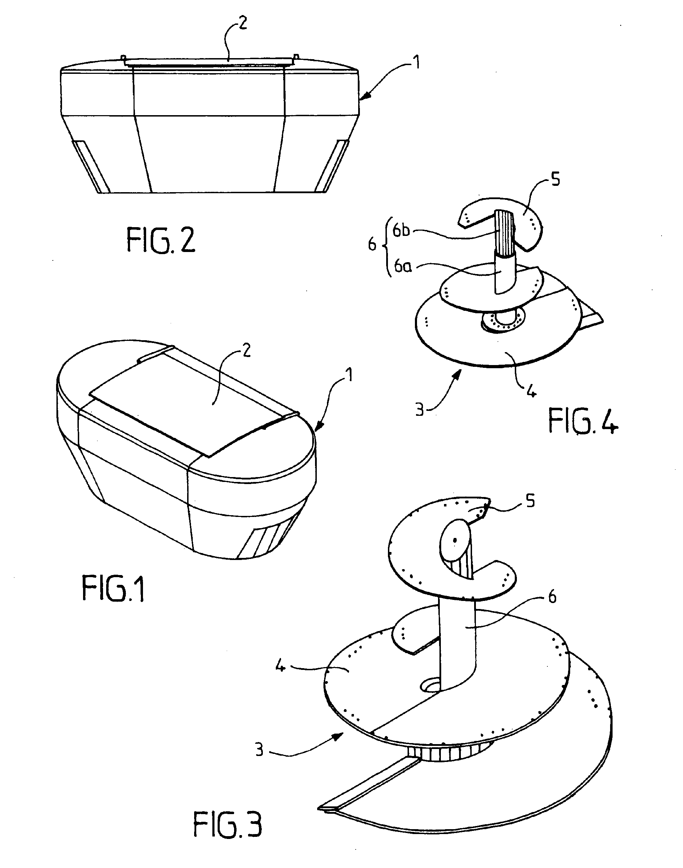

Selon un second mode de réalisation représenté à la figure 4, l'axe 6 de la vis 3 est constitué d'un tube creux 6a sur lequel est monté le premier filet 4 et d'une tige 6b qui est disposé dans le tube creux 6a et sur laquelle est monté le second filet 5. Dans ce cas, les filets sont de même sens mais tournent en sens inverse l'un par rapport à l'autre.

Bien évidemment, et de façon connue, la vis de mélange est entraînée en rotation par un moteur disposé sous le caisson 1 ou par le moteur de l'engin sur lequel est disposé ce caisson.

En rotation, les bords de ces filets ont pour enveloppe un tronc de cône dont le sommet est situé à la partie supérieure de l'axe de rotation 6 de cette vis 3.

Ainsi, les produits présents dans le caisson 1 sont mélangés par le premier filet 4 de la vis de mélange 3 en les remontant du bas du caisson 1 vers le couvercle 2, mais au niveau du second filet 5 de la vis 3, les produits sont renvoyés vers le bas du caisson 1, ce qui augmente l'intensité du mélange. De plus, le couvercle 2 du caisson 1 exerce une légère pression sur les produits en mélange, contribuant ainsi à éviter tout débordement des produits en mélange hors du caisson 1.

## Revendications

1. Caisson pour mélanger des aliments destinés à des animaux comportant notamment un dispositif de mélange, **caractérisé par le fait que** ledit dispositif de mélange est constitué par au moins une vis (3) de mélange d'axe vertical (6), qui comprend, du bas vers le haut, un premier filet (4) tournant dans un certain sens, et un second filet (5) tournant en sens inverse dudit premier filet (4).

2. Caisson selon la revendication 1, **caractérisé par le fait que** le second filet (5), ou filet inversé, s'étend approximativement sur un pas.

3. Caisson selon la revendication 1, **caractérisé par le fait qu'**il comporte un couvercle (2).

4. Caisson selon l'une quelconque des revendications 1 à 3, **caractérisé par le fait que** le premier filet et le second filet sont de sens contraire et fixés sur l'axe de la vis mélangeuse.

5. Caisson selon l'une quelconque des revendications 1 à 3, **caractérisé par le fait que** l'axe (6) de la vis (3) est constitué d'un tube creux (6a) sur lequel est monté le premier filet (4) et d'une tige (6b) qui est disposé dans ledit tube creux (6a) et sur laquelle est monté le second filet (5), les deux filets étant de même sens mais tournant en sens inverse.

6. Caisson selon l'une quelconque des revendications 1 à 5, **caractérisé par le fait qu'**en rotation, les bords des filets (4 et 5) ont pour enveloppe un tronc de cône dont le sommet est situé à la partie supérieure de l'axe de rotation (6) de cette vis (3).
